# EUROPÄISCHE PATENTSCHRIFT

(11) **EP 1 239 564 B1**
(45) Veröffentlichungstag und Bekanntmachung des Hinweises auf die Patenterteilung: **30.04.2014**
(21) Anmeldenummer: 02004736.1
(22) Anmeldetag: 01.03.2002
(51) Int. Cl.: H02G 3/10

(54) **Installationsverteiler**
Distribution box
Boîtier de distribution

(30) Priorität: 08.03.2001 DE 10111339; 09.08.2001 DE 10139221
(43) Veröffentlichungstag der Anmeldung: 11.09.2002
(73) Patentinhaber: ABB AG, 68309 Mannheim (DE)
(72) Erfinder: van Dijk, Ron, NL-3853 CC Ermelo (NL); Kuipers, Johannes Doede Hendrik, NL-6715 EL Ede (NL); van Leeuwen, Saskia Maria Hester, NL-6836 ED Amheim (NL)

(56) Entgegenhaltungen:
- EP-A- 0 975 079
- DE-U1- 8 300 574
- FR-A- 2 670 625
- US-A- 4 607 135

## Beschreibung

Die Erfindung betrifft eine Installationsverteiler gemäß dem Oberbegriff des Anspruches 1.

Installationsverteiler der eingangs genannten Art besitzen normalerweise ein Gehäuseunterteil mit umlaufenden Seitenwänden, auf dessen Bodenseite bzw. Bodenfläche eine Normprofiltragschiene, normalerweise eine Hutprofilschiene, befestigt ist, auf welche Installationsgeräte, beispielsweise Leitungsschutzschalter, Fehlerstromschutzschalter oder dergleichen aufschnappbar sind.

Es ist eine Reihe solcher Installationsverteiler oder Installationsverteilungen in Gebrauch, bei denen die Tragschiene praktisch die gesamte horizontale Breite des Gehäuseunterteils überdeckt und in der vertikal unteren Hälfte des Gehäuseunterteils angeordnet und daran befestigt ist. Dadurch ist relativ wenig Raum zur Verdrahtung gegeben; im wesentlichen ist nur der Raum oberhalb der Installationsgeräte frei für eine ziemlich unübersichtliche und wenig flexible Verdrahtung. Nach Einbau der Installationsgeräte ist auch relativ wenig Platz zur Einführung des Zugangskabels, so daß insgesamt die Handhabung derartiger Installationsverteilungen umständlich ist.

Das Dokument DE8300574U offenbart ein Gerät gemäss dem Oberbegriff des Anspruchs 1.

Aufgabe der Erfindung ist es, eine Installationsverteilung der eingangs genannten Art zu schaffen, bei der der Raum zur Verdrahtung ausreichend groß ist und bei der die Verdrahtung selbst so wie die Verlegung der Kabel und Leitungen übersichtlich und flexibel gehalten werden kann.

Diese Aufgabe wird gelöst durch die Merkmale des Anspruches 1.

Danach ist die Erfindung darin zu sehen, daß das erste Ende der Tragschiene an einer vertikal verlaufenden Seitenwandung anschließt und das zweite Ende in Abstand zu der anderen Seitenwandung endet, so daß auch im Raum zwischen dem zweiten Ende der Tragschiene und der anderen vertikal verlaufenden Seitenwandung ausreichend Platz zur Verlegung von Kabeln und Leitungen vorhanden ist.

Der Vorteil dieser Anordnung der Tragschiene besteht darin, daß auf Grund ihrer unsymetrischen Anordnung innerhalb des Gehäuseunterteils ein ausreichend großer Raum, vorteilhaft ein L- förmiger Raum, zur Verdrahtung zur Verfügung steht. Dadurch sind nicht nur eine vereinfachte Montage und Verlegung der Kabel möglich, sondern es ist auch eine gute Übersichtlichkeit der Verdrahtung erzielbar, so daß Fehlanschlüsse und Fehlverdrahtungen, insbesondere bei Änderungen und Ergänzungen, vermieden werden können.

Gemäß einer Ausgestaltung der Erfindung kann die Tragschiene entweder an der links gelegenen vertikal verlaufenden Seitenwandung oder an der rechts gelegenen vertikal verlaufenden Seitenwandung anschließen. Dadurch ist die Flexibilität deutlich erhöht, weil gegenüber den bekannten Anordnungen die Tragschiene so am Boden befestigt werden kann, wie es nach Lage z.B. der Kabeleinführung erforderlich ist.

Eine weitere vorteilhafte Ausgestaltung der Erfindung besteht darin, daß Anschlußklemmenreihen zum Anschließen von Netzleitern zu Verbrauchern bzw. zur Erde sowohl an der vertikal oben liegenden, horizontal verlaufenden Seitenwandung als auch an den vertikal verlaufenden Seitenwänden jeweils parallel dazu verlaufend angeordnet sein können. Dies trägt ebenfalls zur Erhöhung der Flexibilität bei. Daß dabei eine oder mehr Anschlußklemmenleisten nahe der oberen Seitenwandung und eine oder mehr nahe der einen oder nahe der anderen vertikalen Seitenwandung oder nahe beiden Seitenwandungen am Gehäuseboden befestigt sein können, ist selbstverständlich.

Gemäß einer weiteren vorteilhaften Ausgestaltung der Erfindung ist eine Zwischenabdeckung vorgesehen, die am Gehäuseoberteil befestigbar ist und die einen Durchbruch oder eine Durchbrechung aufweist, durch den bzw. die hindurch die Installationsgeräte im montierten Zustand hindurchragen, so daß sie von außen zugänglich sind. Dadurch sind die Verdrahtungsräume abgedeckt, so daß Berührungen evtl. sonst frei zugänglicher, spannungführender Komponenten vermieden ist.

Diese Durchbrechung ist in horizontaler Richtung außermittig vorgesehen, und zwar angepaßt an die Anordnung der Hutprofilschiene.

Insbesondere dann, wenn die Installationsgeräte in Sockelbauweise ausgebildet sind und eine vordere Frontfläche aufweisen, die kleiner ist als die hintere Frontfläche, ragen nur die Abschnitte der Installationsgeräte durch die Durchbrechung hindurch, die nach vorn durch die vordere Frontfläche begrenzt sind. Da die Betätigungselemente, Schaltknebel etc. aus der vorderen Frontfläche herausragen, sind diese einfach und ohne weiteres zugänglich.

Die Begrenzungskanten der Durchbrechung liegen in einer Ebene und der übrige Bereich der Zwischenabdeckung in einer Fläche, die einen größeren Abschnitt von der Bodenfläche des Gehäuseunterteils einnimmt, als der Abstand der Ebene von der Bodenfläche beträgt.

Dadurch liegt die Fläche der Zwischenabdeckung vor den Frontflächen bzw. vor den Enden der Betätigungselemente, so daß die Betätigungselemente, Schaltknebel oder dergleichen, nicht in ihrer Bewegung behindert sind.

Die Verbindungswandungen, insbesondere die horizontal verlaufenden Verbindungswandungen, die an der Zwischenabdeckung einerseits und andererseits an den Begrenzungskanten der Durchbrechung anschließen, verlaufen schräg bzw. in einem Winkel zur Senkrechten zur Bodenfläche des Gehäuseunterteils. Die beiden horizontal verlaufenden Verbindungswandungen bilden somit miteinander einen sich nach vorn öffnenden Winkel miteinander und damit einen Betrachtungs- oder Beobachtungsraum, der sich über die horizontal verlaufenden Verbindungswandungen nach vorne öffnet. Die untere Verbindungswandung ist dabei von schräg oben und die obere Verbindungswandung von schräg unten zu betrachten. Je nach Lage der Installationsverteilung bezogen auf die Augenhöhe des Betrachters können auf beiden Verbindungswandungen aufgebrachte, beispielsweise aufgeklebte Bezeichnungen leicht abgelesen werden, ohne daß der Betrachter seinen Beobachtungspunkt verändern, z.B. sich bükken oder auf eine Leiter steigen, muß.

Der Beobachtungsraum ist nach vorne hin von einer transparenten Abdeckung abgedeckt, die an der Zwischenabdeckung festrastbar ist. Dies kann dadurch erfolgen, daß die transparente Abdeckung mit einer Kante vorzugsweise ihrer oberen Kante an der Zwischenabdeckung drehbar angelenkt ist, wobei an der anderen Kante ein manuell zu betätigender Verschluß vorgesehen ist.

Eine weitere besonders vorteilhafte Ausgestaltung der Erfindung kann dahin gehen, daß an der Zwischenabdeckung Rillen vorgesehen sind, in denen die Abdeckung verschiebbar ist, so daß die Abdeckung aus dem Bereich des Beobachungsraums heraus verschoben werden kann. Die Anordnung ist dabei so getroffen, daß an der unteren Kante der Abdeckung ein Griff vorgesehen ist, mit dem die Abdeckung verschoben werden kann.

Nach Montage der transparenten Abdeckung an der Zwischenabdeckung und der Zwischenabdeckung am Gehäuseoberteil wird das Gehäuseoberteil über die Pfosten mit dem Gehäuseunterteil verbunden. Das Gehäuseoberteil besitzt ebenfalls einen Durchbruch, durch den die transparente Abdeckung zu ihrer Öffnung zugänglich ist.

Die besagte Fläche, die der vordere Bereich der Zwischenabdeckung einnimmt, ist zylinderbogenförmig ausgebildet, wobei die Zylinderachse im montierten Zustand des Verteilers horizontal verläuft. Daran angepaßt sind auch die Abdeckung und die Frontfläche des Gehäuseoberteils zylinderbogenförmig ausgestaltet.

Durch diese besondere Ausgestaltung der Erfindung wird eine Installationsverteilung geschaffen, die nicht nur flexibel betreffend Verdrahtung ist, sondern die auch ein ästhetisch ansprechendes Äußeres aufweist.

Mittels Rastelementen können zwei oder mehr Installationsverteiler bzw. Installationsverteilungen aneinander festgelegt werden.

Zur Fixierung der Klemmenleisten sowohl für die Netzleiter als auch für Erdungsleiter werden Träger vorgesehen, die am Gehäuseunterteil verrastet werden können. Hierzu besitzen die Träger federnde Arme, die im montierten Zustand senkrecht zum Gehäuseboden verlaufen und am Gehäuseunterteil mittels Nasen verrastet werden können.

Weitere vorteilhafte Ausgestaltungen und Verbesserungen der Erfindung sind den weiteren Unteransprüchen zu entnehmen.

Anhand der Zeichnung, in der einige Ausführungsformen und Ausgestaltungen der Erfindung dargestellt sind, sollen die Erfindung so wie weitere vorteilhafte Ausgestaltungen und Verbesserungen der Erfindung sowie weitere Vorteile näher erläutert und beschrieben werden.

Es zeigen
- Fig. 1: eine perspektivische Ansicht eines Installationsverteilers in Explosionsdarstellung,
- Fig. 2: einen Einblick in einen Teil des Gehäuseunterteils mit einem Rastelement für den Anbau eines weiteren Installationsverteilers,
- Fig. 3: eine Einsicht in das Gehäuseunterteil des Installationsverteilers nach den Fig. 1 und 2, in schematischer Darstellung, insbesondere des Verdrahtungsraumes,
- Fig 4 und 5: je eine Einsicht in das Unterteil je eines Installationsverteilers mit unterschiedlichen Anordnungen der Klemmenleisten, in schematischer Darstellung,
- Fig. 6: eine perspektivische Ansicht eines Klemmenleistenträgers
- Fig. 7: eine perspektivische Einsicht in das Gehäuseunterteil und
- Fig. 8: eine schematische Darstellung der Zwischenabdeckung.

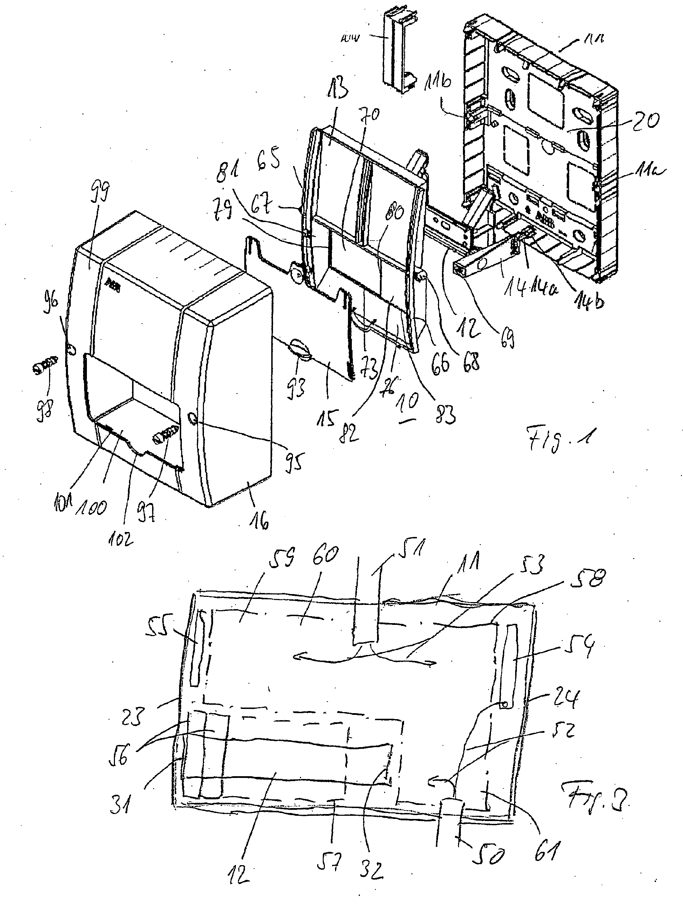

Es sei nun Bezug genommen auf die Fig. 1.

Die Installationsverteilung bzw. der Installationsverteiler 10, der in Fig. 1 in Explosionsdarstellung gezeichnet ist, besitzt ein Gehäuseunterteil 11, in das eine Tragschiene 12 eingesetzt ist. Dem Gehäuseunterteil 11 ist ein Gehäuseoberteil 16 zugeordnet, dan dem eine Zwischenabdeckung 13 befestigbar ist; an der Zwischenabdeckung 13 ist weiterhin eine transparente Abdeckung 15 angebracht. Zur Montage wird das Gehäuseoberteil 16 zusammen mit der Zwischenabdeckung 13 über Pfosten 14 geschoben und zusammen mit der Zwischenabdichtung mit dem Gehäuseunterteil mittels der Pfosten 14 fest verbunden.

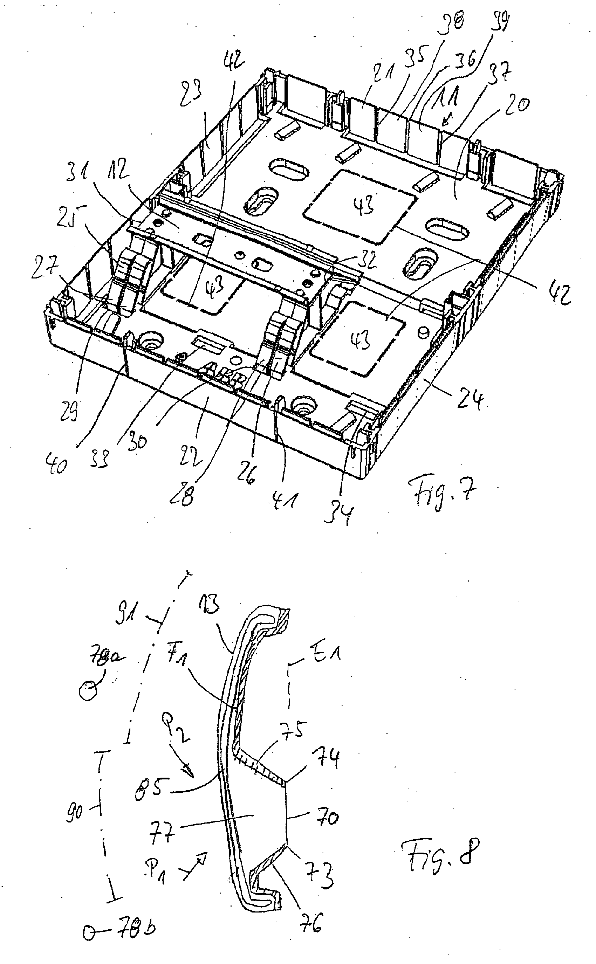

Es sein nun Bezug genommen auf die Fig. 7.

Das Gehäuseunterteil 11 besitzt eine Bodenwand 20, an dem Seitenwände 21, 22, 23 und 24 angeformt sind, die senkrecht dazu verlaufen. Die Seitenwände 21 und 22 verlaufen parallel zur Tragschiene 12, die als Hutprofiltragschiene ausgebildet ist; sie verlaufen demgemäß horizontal, wenn die Installationsverteilung montiert ist. Die beiden Seitenwände bzw. Seitenwandungen 23 und 24 verlaufen senkrecht zu der Längserstreckung der Tragschiene 12 und damit im eingebauten Zustand in vertikaler Richtung.

Die Tragschiene 12 ist mittels zweier Böcke 25 und 26 am Gehäuseboden befestigt, wobei die Böcke 25 und 26 Arme bzw. Armpaare 27 und 28 aufweisen, die nicht näher dargestellte Rastnasen tragen, über die die Arme 27 und 28 in rechteckige Öffnungen 29 und 30 im Gehäuseboden einrastbar sind. Die Öffnungen 29 und 30 sind in einem solchen Abstand voneinander entfernt angeordnet, daß die Tragschiene 12 so befestigt werden kann, daß ihr erstes Ende 31 an die in der Zeichnung links dargestellte Seitenwandung 23 anschließt; das zweite Ende 32 ist von der rechts dargestellten Seitenwandung 24 entfernt, so daß sich zwischen dem zweiten Ende und der Seitenwandung 24 ein Freiraum bildet, der zur Verdrahtung verwendet werden kann, siehe weiter unten.

Der Gehäuseboden besitzt weitere Öffnungen 33 und 34, die es gestatten, die Böcke 25 und 26 so am Gehäuseboden 20 zu fixieren, daß das zweite Ende 32 der Tragschiene 12 an der rechts befindlichen Seitenwandung 24 anschließt.

Die Seitenwandungen 21 bis 24 besitzen auf Ihren Innenflächen Schwächungen 35, 36, 37....., zwischen denen Wandabschnitte 38 und 39 gebildet sind, die ausbrechbar sind, so daß durch sie hindurch Kabel in das Innere des Gehäuseunterteils 11 und aus diesem heraus geführt werden können.

Die Seitenwandungen 23 und 24 sowie 22 besitzen in gleicher Weise mehrere Schwächungen, ähnlich den Schwächungen 35, 36 und 37. Die Außenfläche der Seitenwandung 22 besitzt zwei Rillen 40 und 41, die zur Tarnung von Schrumpfungen dienen. Entsprechende Rillen besitzen auch die anderen Seitenwandungen.

Darüber hinaus besitzt auch der Gehäuseboden rechteckige Schwächungen 42, hier insgesamt drei, entlang denen Bodenwandabschnitte 43 herausgebrochen werden können.

Zu ergänzen ist hier, daß es entsprechende Elemente gibt, mit denen evtl. fehlerhaft und irrtümlich ausgebrochene Wandteile 38, 39 bzw. 43 wieder verschlossen werden können. Diese Elemente sind hier nicht näher dargestellt.

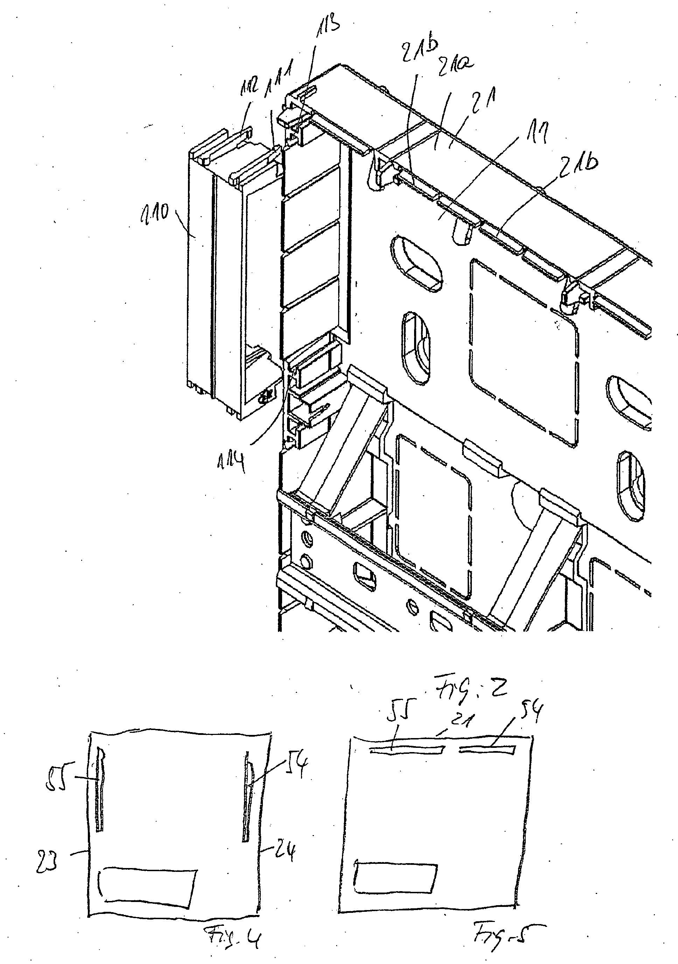

Die Fig. 2 zeigt den Einblick in das Gehäuseunterteil 11 von der anderen, oberen Seite wobei erkennbar ist, daß die Seitenwandung 21 einen Seitenwandungsabschnitt 21a aufweist, auf dessen freier Kante mehrere Vorsprünge 21 b aufgesetzt sind, die als Führung und Zentrierung für das Gehäuseoberteil dient. Die Vorsprünge 21 b sind durch die Schwächungen 35 bis 37 unterteilt. In ähnlicher Weise sind auch die anderen Seitenwandungen ausgebildet.

Es sei nun Bezug genommen auf die Fig. 3.

Die Fig. 3 zeigt eine schematische Darstellung des Gehäuseunterteils 11 mit in das Gehäuseunterteil 11 geführten Kabeleingängen 50 und aus dem Gehäuseunterteil 11 herausgeführten Kabelausgängen 51. Die lediglich durch Pfeile dargestellten Leitungen 52 bzw. 53, von denen je lediglich zwei Pfeile gezeigt sind, führen zu Anschlußklemmenleisten 54 bzw. 55, die auch so angeordnet sein können wie in der Fig. 5 dargestellt. Auf der Tragschiene 12, die an der linken vertikalen Seitenwandung 23 anschließt, sind Installatiönsgeräte 56 befestigt, wobei mit der strichlierten Umrandung 57 der Raum angedeutet ist, in dem sich Installationsgeräte befinden können. Dabei können die Installationsgeräte auch bis zum rechts befindlichen zweiten Ende 32 aufgerastet sein. Strichpunktiert dargestellt mit der Linie 58 ist ein Raum 59, der der Verkabelung bzw. der Verlegung der Leitungen dient. Dieser Raum 59 ist aufgrund der unsymetrischen Anordnung der Tragschiene hier in der linken unteren Ecke L-förmig mit einem Bereich 60 oberhalb der Installationsgeräte 56 und mit einem Bereich 61 zwischen dem Ende 32 der Tragschiene 12 und der rechts befindlichen vertikal verlaufenden Seitenwandung 24. Durch die unsymetrische Anordnung der Tragschiene 12 wird der zusätzliche Raum 61 gewonnen, der die Verdrahtung und Verlegung der Kabel bzw. der Leitungen 52 und 53 erheblich erleichtert und flexibel macht im Vergleich zu bekannten Anordnungen.

Die Figuren 4 und 5 zeigen zwei Klemmenleisten 54 und 55 parallel zu den vertikal verlaufenden Seitenwänden 23 und 24; die Fig. 5 zeigt, daß Anschlußklemmenleisten 54 und 55 auch im Bereich der oberen Seitenwandung 21 angeordnet sein können. Selbstverständlich können bei Bedarf auch Anschlußklemmenleisten 54 und 55 parallel zu den vertilkal verlaufenden Seitenwandungen 23 und 24 angeordnet sein.

Es sei nun wieder Bezug genommen auf die Fig. 1.

Auf dem Boden 20 des Gehäuseunterteils sind zwei Pfosten 14 (von denen nur ein Pfosten 14 sichtbar ist) befestigt, wobei die Befestigung des Pfostens durch Rastelemente oder durch eine Verschraubung vorgenommen sein kann. An den vertikal verlaufenden Seitenkanten 65 und 66 der Zwischenabdeckung 13 sind Augen 67 und 68 angeformt, die Durchgangslöcher (nicht dargestellt) aufweisen. Am Gehäuseoberteil 16 auf dessen Innenseite sind zwei pfostenartige Vorsprünge (nicht gezeigt) angeordnet, die je ein Gewindesackloch für eine Befestigungsschraube besitzen. Die Befestigungsschrauben werden durch die Druchgangslöcher in den Augen 67 und 68 von hinten hindurchgesteckt und in die Gewindesacklöcher in den Vorsprüngen eingeschraubt, wodurch die Zwischenabdeckung 13 an der Innenseite des Gehäuseoberteils befestigt wird.

Die Zwischenabdeckung besitzt in ihrer unteren Hälfte eine Durchbrechung 70, deren horizontal verlaufende Begrenzungskanten 73 und 74 mit dem übrigen Bereich der Zwischenabdeckung 13 über horizontal und winklig zum Gehäuseunterteil verlaufenden Verbindungswände 75 und 76 verbunden sind, wobei diese einen Winkel miteinander bilden, der sich nach vorne zum Betrachter hin öffnet, so daß ein Beobachtungsraum 77 gebildet ist. Die Oberflächen der Verbindungswände 75 und 76 können beschriftet oder mit Bezeichnungsschildern beklebt werden, wobei ersichtlich ist, daß je eine Beobachtung sowohl in Pfeilrichtung P1 auf die Verbindungswandung 75 als auch in Pfeilrichtung P2 auf die Verbindungswandung 76 möglich ist. Ein Beobachter kann dabei von einem Beobachtungspunkt 78 a, der durch einen Kreis oberhalb der Durchbrechung 70 gebildet ist, die Verbindungswandung 76 betrachten, und von einem anderen, unterhalb der Durchbrechung 70 befindlichen Beobachtungspunkt 78 b die Verbindungswandung 75. Die vertikal verlaufenden Begrenzungskanten 79 und 80 der Durchbrechung 70 sind mittels senkrecht zur Bodenfläche 20 verlaufender Verbindungswandungen 81 und senkrecht bzw. parallel zur Bodenwand 20 des Gehäuseunterteils verlaufender Verbindungswandungen 82 verbunden, so daß sich die Durchbrechung in einer Ebene E 1 und der übrige Bereich der Zwischenabdeckung 13 in einer Fläche F1 befindet, deren Abstand von der Bodenfläche 20 des Gehäusebodens größer ist als der der Ebene E 1.

Die Verbindungswandung 82 ist mittels Schwächungen 83 an der Zwischenabdeckung 13 angebracht, so daß die Verbindungswandung 82 ausbrechbar ist, für den Fall, daß die Installationsgeräte 56 an der rechten Seitenwandung 24 anschließen sollen. In entsprechender Weise können auch hier Wandelemente vorgesehen sein, mit denen die Durchbrechung 70 verschließbar ist. In entsprechender Weise wird auch die Durchbrechung 70 hergestellt.

Aus Fig. 8 ist ersichtlich, daß an der Zwischenabdeckung beidseitig an den Kanten 65 und 66 je eine Rille 85 angeordnet ist, in der die Abdeckung 15 gleiten kann, so daß die Abdeckung 15 aus dem unteren Bereich, in dem sie den Betrachtungsraum 77 abdeckt, in einen oberen Bereich verschoben werden kann, in dem sie den Beobachtungsraum freigibt. Es wäre dies in der Fig. 8 strichpunktiert dargestellt der Bereich 90, der den Beobachtungsraum 77 abdeckt, bzw. der Bereich 91, der außerhalb des Beobachtungsraumes 77 liegt und dann, wenn die transparente Abdeckung 15 sich in dem Bereich 91 befindet, den Beobachtungsraum 77 zur Betätigung der Installationsgeräte freigibt. An der unteren horizontal verlaufenden Kante der Abdeckung 15 befindet sich ein Handgriff 93, über den die Abdeckung 15 an der Zwischenabdeckung 13 verschoben werden kann.

Nachdem die Installationsgeräte eingebaut und die Kabel verlegt sind, wird das Gehäuseoberteil 16 mit der die Zwischenabdeckung 13 und der Abdeckung 15 über die Pfosten 14 geschoben und mittels durch Löcher 95 und 96 am Gehäuseoberteil 16 hindurchführbarer Schrauben 97 und 98 an den Pfosten 14 befestigt, so daß auf diese Weise das Gehäuseoberteil 16 fest mit dem Gehäuseunterteil 11 verbunden ist. Dabei sind die Pfosten 14 an ihren zum Gehäuseunterteil 11 hinweisenden Enden mit je einem Rastfortsatz 14 a versehen, an dem sich zwei federnde Rastarme 14 b anschließen; am Gehäuseunterteil 11 sind Durchbrechungen 11 a und 11 b vorgesehen, in die der Rastfortsatz 14 a jedes Pfostens 14 mit den Rastarmen 14 b eingesteckt werden können, so daß die beiden Pfosten 14, von denen der links befindliche abgedeckt ist, am Gehäuseunterteil 11 senkrecht zur Bodenfläche 29 festgerastet werden können. Anstatt der Schrauben 97 und 98 können auch andere Fixierelemente verwendet werden.

Das Gehäuseoberteil 16 besitzt eine Frontwand 99, die einen Durchbruch 100 aufweist, durch den der gesamte Beobachtungsraum 77 zugänglich ist, so daß die Abdeckung 93 vom Beobachtungsraum 77 weg geschoben bzw. wieder zurück geschoben werden kann. Insoweit ragt der Handgriff 93, der auch als Verriegelungselement ausgebildet sein kann, durch den Durchbruch 100 heraus, wobei zusätzlich an der unteren Kante 101 des Durchbruches 100 eine halbkreisförmige Aussparung 102, die dem Handgriff 93 angepaßt ist, vorgesehen ist.

Die Fig. 1 zeigt, daß sowohl die Zwischenabdeckung 13, die Abdeckung 15 als auch die Frontwand 99 des Gehäuseoberteils zylinderbogenförmig geformt sind, wobei die Zylinderachse horizontal verläuft. Diese zylinderbogenförmige Ausgestaltung der Frontwand 99 bzw. der Zwischenabdeckung 13 und der Abdeckung 15 verleihen dem Installationsverteiler bzw. der Installationsverteilung im montierten Zustand ein ästhetisch gutes Aussehen.

Wenn zwei oder mehr Installationsverteiler nebeneinander oder übereinander miteinander verbunden werden sollen, ist ein U-förmiges Rastelement 110 vorgesehen, das so ausgebildet ist, daß es nebeneinander liegende vertikal verlaufende Seitenwandungen zweier Installationsverteiler verrastend miteinander verbindet. Da diese Verbindung auf unterschiedlichste Arten ausgebildet sein, wird hier in diesem Zusammenhang nicht näher darauf eingegangen, wie die eigentliche konstruktive Ausgestaltung der Verbindung ist. Die Fig. 2 zeigt ein solches Rastelement 110 in vergrößerter Darstellung. Wesentlich sind Rastarme 111 und 112, die in entsprechende Rastausnehmungen 113 bzw. 114 einrasten können. Dabei rasten die Arme 111 am Gehäuseunterteil 11 fest, wogegen die Rastarme 12 an dem daneben anzubringenden bzw. anzuschließenden Installationsverteiler festrasten sollen.

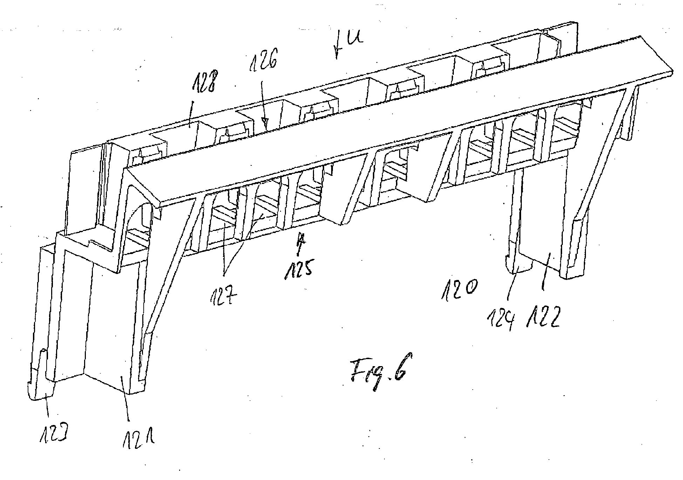

Fig. 6 zeigt einen Träger 120 für eine Anschlußklemmenleiste, die U-förmig mit zwei Füßen 121 und 122 ausgebildet ist, wobei an den Füßen Rastarme 123 und 124 vorgesehen sind, die in entsprechende Vertiefungen am Gehäuseboden 20 einrasten können, hier nicht näher dargestellt. Die Füße 121 und 122 sind mit einer Brücke 125 miteinander verbunden, die eine U-Form aufweist, in deren Innenraum 126 gemäß Pfeilrichtung U Anschlußklemmenleisten einführbar sind, die dann zum Innenraum des Installationsverteilers über Öffnungen 127 für Kabel zugänglich ist. Entsprechende Öffnungen sind auch auf der nicht dargestellten Schenkelwandung 128 vorgesehen, Die U-Form sorgt auch dafür, daß Kabel unter dem Träger 120 hindurchgeführt werden können.

## Patentansprüche

1. Aufputzinstallationsverteiler mit einem Gehäuseunterteil, auf dessen Bodenfläche eine Hutprofiltragschiene angebracht ist, auf der wenigstens ein Installationsgerät, insbesondere ein Leitungsschutzschalter und/oder Fehlerstromschutzschalter und/oder dergleichen, festrastbar ist, wobei die Hutprofilschiene in der vertikal unteren Hälfte des Gehäuseunterteils angeordnet ist, und mit einer Gehäuseabdeckung, **dadurch gekennzeichnet, daß** das erste Ende (31) der Hutprofiltragschiene (12) an einer vertikalen Seitenwand (23) anschließt und das zweite Ende (32) der Hutprofiltragschiene (12) im Abstand zu der anderen vertikalen Seitenwand (24) endet, so daß im Raum (61) zwischen dem zweiten Ende (32) der Hutprofiltragschiene (12) und der anderen vertikalen Seitenwand (24) ausreichend Platz zur Kabelverlegung vorhanden ist.

2. Installationsverteiler nach Anspruch 1, **dadurch gekennzeichnet, daß** die Tragschiene (12) am Boden (20) des Gehäuseunterteils (11) an unterschiedlichen Stellen in ihrer Längsrichtung verschoben befestigbar ist.

3. Installationsverteiler nach Anspruch 2, **dadurch gekennzeichnet, daß** auf dem Boden (20) des Gehäuseunterteils (11) demontierbare Böcke (25, 26) vorgesehen sind, auf denen die Tragschiene (12) befestigbar ist.

4. Installationsverteiler nach Anspruch 3, **dadurch gekennzeichnet, daß** die Bökke (25, 26) wahlweise an je zwei Stellen (29, 30; 33, 34) am Boden (20) fixierbar sind.

5. Installationsverteiler nach einem der vorigen Ansprüche, **dadurch gekennzeichnet, daß** wenigstens eine Anschlußklemmenreihe (54, 55) vertikal nahe den vertikalen Seitenwänden und/oder horizontal nahe der oberen horizontal verlaufenden Seitenwand des Gehäuseunterteiles (11) befestigbar ist (siehe Fig. 4 und 5).

6. Installationsverteiler nach einem der vorigen Ansprüche, **dadurch gekennzeichnet, daß** eine am Gehäuseoberteil (16) auf deren Innenseite befestigbare Zwischenabdeckung (13) vorgesehen ist, die eine Durchbrechung (70) aufweist, durch die auf der Tragschiene (12) befestigte Installationsgeräte (56) im montierten Zustand herausragen.

7. Installationsverteiler nach Anspruch 6, **dadurch gekennzeichnet, daß** die Begrenzungskanten (73, 74, 79, 80) der Durchbrechung (70) in einer ersten Ebene (E 1) und der übrige Bereich der Zwischenabdeckung (13) in einer Fläche (F 1) liegen, die vom Boden (20) des Gehäuseunterteils (11) einen größeren Abstand aufweist als die erste Ebene (E 1).

8. Installationsverteiler nach Anspruch 7, **dadurch gekennzeichnet, daß** wenigstens die horizontal sich erstreckenden Verbindungswandungen (75, 76) zwischen besagter Fläche und den Begrenzungskanten der Durchbrechung (70) schräg verlaufen, so daß die Verbindungswandungen (75, 76) einen V-förmig sich nach vorne öffnenden Beobachtungsraum (77) bilden.

9. Installationsverteiler nach Anspruch 8, **dadurch gekennzeichnet, daß** die oberen und unteren Verbindungswandungen (75, 76), die sich parallel zur Horizontalen erstrecken, beschriftbar bzw. mit Bezeichnungsschildern versehbar sind.

10. Installationsverteiler nach einem der vorigen Ansprüche, **dadurch gekennzeichnet, daß** zur Abdeckung des Beobachtungsraumes (77) eine transparente Abdekkung (15) an der Zwischenabdeckung (13) anrastbar ist.

11. Installationsverteiler nach Anspruch 10, **dadurch gekennzeichnet, daß** die Abdeckung (15) an der Zwischenabdeckung (13) mit einer Rastung und einem manuell befestigbarem Verschluß befestigbar ist.

12. Installationsverteiler nach Anspruch 10, **dadurch gekennzeichnet, daß** die Abdeckung mit ihrer oberen Kante an der Zwischenabdeckung (13) drehbar gelagert ist.

13. Installationsverteiler nach Anspruch 11, **dadurch gekennzeichnet, daß** die Abdeckung (15) an der Zwischenabdeckung(13) verschiebbar geführt ist, der Gestalt, daß zur Erreichung eines Zugangs zu den Installationsgeräten die Abdeckung (15) aus dem Bereich des Beobachtungsraumes (77) herausschiebbar ist.

14. Installationsverteiler nach Anspruch 13, **dadurch gekennzeichnet, daß** an der Zwischenabdeckung (13) aufeinander zuweisende Führungsrillen (85) vorgesehen sind, in denen die Abdeckung (15) verschiebbar geführt ist.

15. Installationsverteiler nach einem der vorigen Ansprüche, **dadurch gekennzeichnet, daß** das Gehäuseoberteil (16) eine Ausnehmung (100) aufweist, deren Abmessungen denen der Abdeckung (15) angepaßt sind.

16. Installationsverteiler nach einem der vorigen Ansprüche, daß ein weiterer Installationsverteiler mittels eines Rastelementes (110) ansetzbar ist.

17. Installationsverteiler nach einem der vorigen Ansprüche, **dadurch gekennzeichnet, daß** die besagte vordere Fläche (F 1) zylinderbogenförmig ausgebildet ist, wobei die Mittelachse des Zylinderbogens horizontal (parallel zum Verlauf der Tragschiene (12)) verläuft.

18. Installationsverteiler nach Anspruch 17, **dadurch gekennzeichnet, daß** die Frontwand (99) des Gehäuseoberteils (16), die Zwischenabdeckung (13) die Abdekkung (15) parallel zu besagter Fläche (F 1) verlaufen und ebenfalls zylinderbogenförmig ausgebildet sind.

19. Installationsverteiler nach einem der vorigen Ansprüche, **dadurch gekennzeichnet, daß** der Boden (20) und/oder die Seitenwandungen (21, 22; 23, 24) ausbrechbare Abschnitte aufweisen, die durch Schwächungen (35, 36...) begrenzt sind.

20. Installationsverteiler nach Anspruch 19, **dadurch gekennzeichnet, daß** Verschließelemente vorgesehen sind, mit denen versehentlich ausgebrochene Seitenwand- bzw. Bodenabschnitte wiederverschließbar sind.

21. Installationsverteiler nach einem der vorigen Ansprüche, **dadurch gekennzeichnet, daß** das Gehäuseoberteil (16) zusammen mit der Zwischenabdeckung (13) am Boden des Gehäuseunterteils (11) mittels Pfosten (14) fixierbar ist.

22. Installationsverteiler nach einem der vorigen Ansprüche, **dadurch gekennzeichnet, daß** die Öffnung (70) je nach Anordnung der Tragschiene (12) an unterschiedlichen Stellungen oberhalb derjeweiligen Anbringung der Tragschiene (12) durch Ausbrechen von Wandungsabschnitten vorsehbar ist.

## Claims

1. Surface-mounted service distribution board having a housing lower part, a top-hat mounting rail being fitted to the floor surface of the said housing lower part, it being possible for at least one service device, in particular a line protection circuit breaker and/or a residual current device and/or the like, to be fixedly latched on the said top-hat mounting rail, wherein the top-hat rail is arranged in the vertically lower half of the housing lower part, and having a housing cover, **characterized in that** the first end (31) of the top-hat mounting rail (12) adjoins a vertical side wall (23), and the second end (32) of the top-hat mounting rail (12) ends at a distance from the other vertical side wall (24), so that there is enough space to lay cables in the space (61) between the second end (32) of the top-hat mounting rail (12) and the other vertical side wall (24).

2. Service distribution board according to Claim 1, **characterized in that** the mounting rail (12) can be attached to the floor (20) of the housing lower part (11) at different points in a manner displaced in respect of the longitudinal direction of the said mounting rail.

3. Service distribution board according to Claim 2, **characterized in that** removable blocks (25, 26) are provided on the floor (20) of the housing lower part (11), it being possible for the mounting rail (12) to be attached to the said removable blocks.

4. Service distribution board according to Claim 3, **characterized in that** the blocks (25, 26) can be fixed to the floor (20) selectively at two respective points (29, 30; 33, 34).

5. Service distribution board according to one of the preceding claims, **characterized in that** at least one connection terminal block (54, 55) can be attached vertically close to the vertical side walls and/or horizontally close to the upper horizontally running side wall of the housing lower part (11) (see Figures 4 and 5).

6. Service distribution board according to one of the preceding claims, **characterized in that** an intermediate cover (13), which can be attached to the housing upper part (16) on the inner face of the said housing upper part and which has an aperture (70) through which service devices (56), which are attached to the mounting rail (12), project in the assembled state, is provided.

7. Service distribution board according to Claim 6, **characterized in that** the boundary edges (73, 74, 79, 80) of the aperture (70) lie in a first plane (E 1) and the remaining region of the intermediate cover (13) lies in an area (F 1) which is at a greater distance from the floor (20) of the housing lower part (11) than the first plane (E 1).

8. Service distribution board according to Claim 7, **characterized in that** at least the horizontally extending connecting walls (75, 76) run between the said area and the boundary edges of the aperture (70) in an inclined manner, so that the connecting walls (75, 76) form an observation space (77) which is open at the front in the form of a V.

9. Service distribution board according to Claim 8, **characterized in that** the upper and lower connecting walls (75, 76) which extend parallel to the horizontal can be labelled or provided with nameplates.

10. Service distribution board according to one of the preceding claims, **characterized in that**, in order to cover the observation space (77), a transparent cover (15) can be latched to the intermediate cover (13).

11. Service distribution board according to Claim 10, **characterized in that** the cover (15) can be attached to the intermediate cover (13) by way of a latching means and a closure which can be manually attached.

12. Service distribution board according to Claim 10, **characterized in that** the cover is rotatably mounted on the intermediate cover (13) by way of its upper edge.

13. Service distribution board according to Claim 11, **characterized in that** the cover (15) is displaceably guided on the intermediate cover (13) in such a way that, in order to provide access to the service devices, the cover (15) can be pushed out of the region of the observation space (77).

14. Service distribution board according to Claim 13, **characterized in that** guide grooves (85) which face one another and into which the cover (15) can be displaceably guided are provided on the intermediate cover (13).

15. Service distribution board according to one of the preceding claims, **characterized in that** the housing upper part (16) has a recess (100), the dimensions of the said recess being matched to those of the cover (15).

16. Service distribution board according to one of the preceding claims, **characterized in that** a further service distribution board can be fitted by means of a latching element (110).

17. Service distribution board according to one of the preceding claims, **characterized in that** the said front surface (F 1) is in the form of a cylinder arc, wherein the centre axis of the cylinder arc runs horizontally (parallel to the profile of the mounting rail (12)).

18. Service distribution board according to Claim 17, **characterized in that** the front wall (99) of the housing upper part (16), the intermediate cover (13) and the cover (15) run parallel to the said surface (F 1) and are likewise in the form of a cylinder arc.

19. Service distribution board according to one of the preceding claims, **characterized in that** the floor (20) and/or the side walls (21, 22; 23, 24) have sections which can be broken open and which are delimited by weak points (35, 36...).

20. Service distribution board according to Claim 19, **characterized in that** closing elements are provided, it being possible for side-wall sections or floor sections which have been accidentally broken open to be closed again by way of the said closing elements.

21. Service distribution board according to one of the preceding claims, **characterized in that** the housing upper part (16), together with the intermediate cover (13), can be fixed to the floor of the housing lower part (11) by means of posts (14).

22. Service distribution board according to one of the preceding claims, **characterized in that** the opening (70), depending on the arrangement of the mounting rail (12), can be provided in different positions above the respective fitting means of the mounting rail (12) by breaking open wall sections.

## Revendications

1. Boîtier d'installation en saillie comprenant une partie inférieure de boîtier, sur la surface de fond de laquelle est monté un rail de support profilé en chapeau sur lequel peut être encliqueté fixement au moins un appareil d'installation, en particulier un coupe-circuit et/ou un disjoncteur différentiel et/ou similaire, le rail profilé en chapeau étant disposé dans la moitié inférieure verticale de la partie inférieure de boîtier, et comprenant un recouvrement de boîtier, **caractérisé en ce que** la première extrémité (31) du rail de support profilé en chapeau (12) se raccorde à une paroi latérale verticale (23) et la deuxième extrémité (32) du rail de support profilé en chapeau (12) se termine à distance de l'autre paroi latérale verticale (24), de telle sorte qu'il existe suffisamment de place pour la pose de câbles dans l'espace (61) entre la deuxième extrémité (32) du rail de support profilé en chapeau (12) et l'autre paroi latérale verticale (24).

2. Boîtier d'installation selon la revendication 1, **caractérisé en ce que** le rail de support (12) peut être fixé en différents endroits de manière à pouvoir coulisser dans sa direction longitudinale sur le fond (20) de la partie inférieure de boîtier (11).

3. Boîtier d'installation selon la revendication 2, **caractérisé en ce que** des plots démontables (25, 26) sont prévus sur le fond (20) de la partie inférieure de boîtier (11), sur lesquels plots peut être fixé le rail de support (12).

4. Boîtier d'installation selon la revendication 3, **caractérisé en ce que** les plots (25, 26) peuvent être fixés de manière sélective à chaque fois en deux endroits (29, 30 ; 33, 34) sur le fond (20).

5. Boîtier d'installation selon l'une quelconque des revendications précédentes, **caractérisé en ce qu'**au moins une rangée de bornes de raccordement (54, 55) peut être fixée verticalement à proximité des parois latérales verticales et/ou horizontalement à proximité de la paroi latérale supérieure s'étendant horizontalement de la partie inférieure de boîtier (11) (voir les figures 4 et 5).

6. Boîtier d'installation selon l'une quelconque des revendications précédentes, **caractérisé en ce qu'**un recouvrement intermédiaire (13) pouvant être fixé à la partie supérieure de boîtier (16) sur son côté intérieur est prévu, lequel présente un orifice (70) à travers lequel sortent dans l'état monté des appareils d'installation (56) fixés sur le rail de support (12).

7. Boîtier d'installation selon la revendication 6, **caractérisé en ce que** les arêtes de limitation (73, 74, 79, 80) de l'orifice (70) sont situées dans un premier plan (E1) et la région restante du recouvrement intermédiaire (13) est située dans une surface (F1) qui présente une plus grande distance au fond (20) de la partie inférieure de boîtier (11) que le premier plan (E1).

8. Boîtier d'installation selon la revendication 7, **caractérisé en ce qu'**au moins les parois de liaison s'étendant horizontalement (75, 76) s'étendent obliquement entre ladite surface et les arêtes de limitation de l'orifice (70), de telle sorte que les parois de liaison (75, 76) forment un espace d'observation (77) s'ouvrant en forme de V vers l'avant.

9. Boîtier d'installation selon la revendication 8, **caractérisé en ce que** les parois de liaison supérieure et inférieure (75, 76) qui s'étendent parallèlement à l'horizontale peuvent être munies d'inscriptions ou de plaquettes de marquage.

10. Boîtier d'installation selon l'une quelconque des revendications précédentes, **caractérisé en ce que**, pour le recouvrement de l'espace d'observation (77), un recouvrement transparent (15) peut être encliqueté sur le recouvrement intermédiaire (13).

11. Boîtier d'installation selon la revendication 10, **caractérisé en ce que** le recouvrement (15) peut être fixé sur le recouvrement intermédiaire (13) avec un encliquetage et une fermeture pouvant être fixée manuellement.

12. Boîtier d'installation selon la revendication 10, **caractérisé en ce que** le recouvrement est monté de manière à pouvoir tourner avec son arête supérieure sur le recouvrement intermédiaire (13).

13. Boîtier d'installation selon la revendication 11, **caractérisé en ce que** le recouvrement (15) est guidé de manière à pouvoir coulisser sur le recouvrement intermédiaire (13), de telle sorte que, pour obtenir un accès aux appareils d'installation, le recouvrement (15) puisse être ressorti par coulissement hors de la région de l'espace d'observation (77).

14. Boîtier d'installation selon la revendication 13, **caractérisé en ce que** sur le recouvrement intermédiaire (13) sont prévues des rainures de guidage (85) tournées les unes vers les autres, dans lesquelles le recouvrement (15) est guidé de manière coulissante.

15. Boîtier d'installation selon l'une quelconque des revendications précédentes, **caractérisé en ce que** la partie supérieure de boîtier (16) présente un évidement (100) dont les dimensions sont adaptées à celles du recouvrement (15).

16. Boîtier d'installation selon l'une quelconque des revendications précédentes, **caractérisé en ce qu'**un boîtier d'installation supplémentaire peut être installé au moyen d'un élément d'encliquetage (110).

17. Boîtier d'installation selon l'une quelconque des revendications précédentes, **caractérisé en ce que** ladite surface avant (F1) est réalisée sous forme courbée cylindrique, l'axe médian de la courbe cylindrique s'étendant horizontalement (parallèlement à l'allure du rail de support (12)).

18. Boîtier d'installation selon la revendication 17, **caractérisé en ce que** la paroi avant (99) de la partie supérieure de boîtier (16), le recouvrement intermédiaire (13) et le recouvrement (15) s'étendent parallèlement à ladite surface (F1) et sont également réalisés sous forme courbée cylindrique.

19. Boîtier d'installation selon l'une quelconque des revendications précédentes, **caractérisé en ce que** le fond (20) et/ou les parois latérales (21, 22 ; 23, 24) présentent des portions frangibles qui sont limitées par des affaiblissements (35, 36...).

20. Boîtier d'installation selon la revendication 19, **caractérisé en ce que** des éléments de fermeture sont prévus, avec lesquels des portions de paroi latérale ou de fond accidentellement rompues peuvent être à nouveau refermées.

21. Boîtier d'installation selon l'une quelconque des revendications précédentes, **caractérisé en ce que** la partie supérieure de boîtier (16) peut être fixée conjointement avec le recouvrement intermédiaire (13) au fond de la partie inférieure de boîtier (11) au moyen de colonnettes (14).

22. Boîtier d'installation selon l'une quelconque des revendications précédentes, **caractérisé en ce que** l'ouverture (70) peut être prévue, en fonction de l'agencement du rail de support (12), en des endroits différents au-dessus du montage respectif du rail de support (12) par rupture de portions de paroi.
